(19) Europäisches Patentamt
European Patent Office
Office européen des brevets

(11) Veröffentlichungsnummer: **0 327 698 A2**

(12) **EUROPÄISCHE PATENTANMELDUNG**

(21) Anmeldenummer: 88120246.9

(51) Int. Cl.⁴: C08F 8/30 , C08C 19/22

(22) Anmeldetag: 05.12.88

(30) Priorität: 11.02.88 DE 3804185

(43) Veröffentlichungstag der Anmeldung: 16.08.89 Patentblatt 89/33

(84) Benannte Vertragsstaaten: AT BE CH DE FR GB IT LI NL

(71) Anmelder: HÜLS AKTIENGESELLSCHAFT
Patentabteilung / PB 15 - Postfach 13 20
D-4370 Marl 1(DE)

(72) Erfinder: Neugebauer, Wolfgang, Dr.
Karl-Leisner-Strasse 3
D-4408 Dülmen-Merfeld(DE)
Erfinder: Mügge, Joachim, Dr.
Droste-Hülshoff-Strasse 17
D-4358 Haltern(DE)
Erfinder: Schlobohm, Michael, Dr.
Lipper Weg 195
D-4370 Marl(DE)

(54) **Funktionalisierte olefinische Polymere und Verfahren zu ihrer Herstellung.**

(57) Verfahren zum Funktionalisieren von thermoplastisch verarbeitbaren Polymeren und danach hergestellte Polymerisate.

Ziel der Erfindung war es, thermoplastisch verarbeitbare olefinische Polymere mit Hilfe weitgehend ungefährlicher Verbindungen möglichst quantitativ zu funktionalisieren.

Es wurde jetzt gefunden, daß sich dies erreichen läßt, wenn man die zu funktionalisierenden Polymeren in der Schmelze mit Asparaginsäure bzw. dessen Derivaten umsetzt.

Die auf diese Weise funktionalisierten Polymere können Polykondensaten zugesetzt werden, um deren Kerbschlagzähigkeit zu verbessern.

EP 0 327 698 A2

# Funktionalisierte olefinische Polymere und Verfahren zu ihrer Herstellung

Die Erfindung betrifft funktionalisierte olefinische Polymere und ein Verfahren zum Funktionalisieren von thermoplastisch verarbeitbaren, olefinischen Polymeren, die selbst keine funktionellen Gruppen enthalten.

Ein genereller Nachteil aller olefinischen Polymeren ist ihre schlechte Verträglichkeit mit Polykondensaten, die einen hohen Anteil an polaren Gruppen enthalten, wie z. B. Polyester, Polyamide und Polycarbonate. Dieser Umstand wird deshalb als besonders gravierend empfunden, weil der Zusatz von Polyolefinen, Kautschuken, etc. die Kerbschlagzähigkeit der Polykondensate unter der Voraussetzung einer guten Verträglichkeit deutlich verbessert.

Es gibt grundsätzlich zwei Möglichkeiten, die Verträglichkeit der Polyolefine, Kautschuke, etc. mit den Polykondensaten zu verbessern.

1. Man stellt für den jeweiligen Verwendungszweck zu optimierende Copolymere her, die als Comonomere spezielle, die Verträglichkeit verbessernde Monomere enthalten. Dieses Verfahren ist jedoch sehr aufwendig, da jeweils spezielle Produkte in kleinen Mengen hergestellt werden müssen.

2. Es ist grundsätzlich günstiger, von den leicht verfügbaren, olefinischen Polymeren auszugehen und diese zu funktionalisieren, indem man sie mit monomeren Alpha-Beta-ungesättigten Carbonsäuren, Anhydriden oder Estern umsetzt. Diese in der Literatur zuweilen auch als "Pfropfung" bezeichnete Reaktion kann in Lösung oder in der Schmelze erfolgen; in einer Reihe von Fällen wird der Zusatz von Radikalbildnern wie Azodiisobutyronitril, Ditert.butylperoxid, Cumylhydroperoxid oder Dicumylperoxid empfohlen.

So beschreiben die US-PSS 3 236 917 und 3 862 265 das Pfropfen von Polyolefinen mit ungesättigen Säureanhydriden in einer Walzenmühle bzw. in Gegenwart eines Radikalstarters, wobei das Polyolefin vernetzt wird. Die US-PS 3 873 643 offenbart ein polymeres Material, das aus Polyolefinen mit aufgepfropften (poly)cyclischen Säure- oder Anhydridgruppen besteht und im Extruder oder in der Walzenmühle hergestellt wird.

Gegenstand der US-PS 3 882 194 ist ein Verfahren, bei dem eine Mischung aus einem ungesättigten Carbonsäureester und einer ungesättigten Carbonsäure bzw. Anhydrid vorzugsweise mit Hilfe von Peroxiden aufgepfropft wird.

Das Verfahren, das in der US-PS 4 026 967 beschrieben ist, zeichnet sich dadurch aus, daß es bei Temperaturen zwischen 350 und 500 °C zu einer schnellen unkatalysierten Reaktion zwischen einem Polyolefin und einer ungesättigten Verbindung, wie z. B. Fumarsäure, kommt. Der starke Anstieg des Schmelzindex kann als Zeichen dafür gewertet werden, daß die Polyolefine zumindest teilweise abgebaut werden.

Die DE-OS 22 16 718 beschreibt die Zugabe flüssiger, ungesättigter Monomerer wie z. B. Maleinsäureanhydrid, Styrol und Acrylsäure zu einer Polyolefinschmelze in einem Extruder bei höheren Temperaturen. In der Regel wird ein Peroxid gleichzeitig mit zugesetzt. Das Verfahren ist nur dann erfolgsversprechend durchführbar, wenn es gelingt, die nicht umgesetzten Monomeren möglichst quantitativ zu entfernen.

Die DE-OS 24 01 149 beschreibt die partielle Umsetzung eines EPDM-Kautschukes mit Maleinsäureanhydrid bei Temperaturen bis 350 °C.

Die bisher bekannten Verfahren zur Funktionalisierung von olefinischen Polymeren sind noch unbefriedigend:

- Die Umsetzung erfordert in der Regel drastische Reaktionsbedingungen. Üblicherweise arbeitet man in der Schmelze bei Temperaturen von 200 bis 500 °C. Dies führt dazu, daß die toxischen Alpha-Betaungesättigten Verbindungen teilweise verdampfen und in erheblicher Weise das Bedienungspersonal belästigen.
- Zwar kann man vielfach die Reaktion auch in Lösung durchführen; aber in diesen Fällen ist der Zusatz von Radikalbildnern nicht zu vermeiden. In Gegenwart von freien Radikalen kommt es zu einer Änderung des Molekulargewichtes durch Vernetzungs- oder Abbaureaktionen (vgl. DE-PS 22 16 718).
- Eine große Anzahl der üblicherweise verwendeten Säuren und Anhydride ist sehr korrosiv; ihre Verwendung erfordert daher besondere Schutzmaßnahmen.
- Die Ester sind im allgemeinen zu flüchtig und wegen der eingeschränkten Reaktivität der Estergruppe häufig nicht mit Polykondensaten verträglich.
- Selbst bei Zusatz von Radikalstartern läuft die Reaktion selten quantitativ ab.

Ein Ziel der vorliegenden Erfindung war es, thermoplastisch verarbeitbare olefinische Polymere zu funktionalisieren, ohne die soeben aufgeführten Nachteile in Kauf nehmen zu müssen. Ein weiteres Ziel der vorliegenden Erfindung bestand darin, funktionalisierte olefinische Polymere bereit zu stellen, die sich zur Verbesserung der Kerbschlagzähigkeit von Polykondensaten eignen.

Es wurde jetzt überraschend ein Weg gefunden, um olefinische Polymere zu funktionalisieren. Dieser besteht darin, daß man als Polymer das

Polymerisat mindestens eines Monomeren aus der Gruppe der Olefine, Diene und vinylaromatischen Verbindungen und als Funktionalisierungsmittel Asparaginsäure bzw. ein Asparaginsäurederivat der allgemeinen Formel

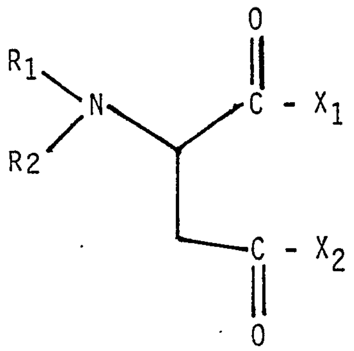

einsetzt. Das Polymer ist vorzugsweise ein Polyalkenylen, insbesondere ein Polyoctenylen, oder ein EP(D)M-Kautschuk. Als Asparaginsäurekomponente kommen insbesondere Asparaginsäure selbst sowie die Ester der Asparaginsäure oder N-substituierter Asparaginsäuren mit 2 Äquivalenten eines maximal 10 C-Atome enthaltenden Alkohols infrage, wobei vorzugsweise auf 96 bis 99,9 Gewichtsprozent des Polymeren 0,1 bis 4 Gewichtsprozent der Asparaginsäurekomponente kommen. Die Reaktion wird insbesondere bei 180 bis 320 °C durchgeführt, wobei auch in Gegenwart eines Katalysators und/oder Stabilisators gearbeitet werden kann. Gegenstand der vorliegenden Erfindung sind auch die nach diesem Verfahren erhaltenen olefinischen Polymeren.

Der Vorteil des vorliegenden Verfahrens besteht vor allem darin, daß zur Funktionalisierung keine toxischen oder korrosiven Verbindungen eingesetzt werden müssen. Die Funktionalisierung kann problemlos in konventionell ausgerüsteten Schmelzemischern erfolgen.

Als olefinisches Polymeres soll im Rahmen dieser Erfindung ein Harz mit einem Molekulargewicht von 10 000 bis 300 000 verstanden werden, das keine funktionellen Gruppen enthält. In der Regel ist es linear aufgebaut; es kann aber auch verzweigt sein. Es enthält, bezogen auf 4 Kohlenstoffatome der Kette, maximal eine olefinische Doppelbindung. Im einzelnen handelt es sich um folgende Polymerklassen:

I. Polyalkenylene, die durch ringöffnende Polymerisation von Cycloolefinen mit 5 - 12 C-Atomen erhalten werden, wie Polypentenylene, Polydodecenylene und inbesondere Polyoctenylene (vgl. K. J. Ivin, T. Sagusa "Ring-Opening Polymerization" Vol. 1, Elsevier Appl. Sci. Publishers, London, insbesondere Seite 121 - 183, (1984).
Bevorzugt werden Polyoctenylene mit einer Viskositätszahl von 50 bis 350 ml/g, insbesondere 80 bis 160 ml/g, bestimmt an einer 0,1 %igen toluolischen Lösung, und einem trans-Doppelbindungsanteil von 55 bis 95 %, insbesondere 75 bis 85 %.

II. EPM-Kautschuk wird in bekannter Weise durch Polymerisation eines Gemisches aus 25 - 75 % Ethylen und 75 - 25 % Propylen in Gegenwart eines Ziegler-Natta-Katalysators, wie z. B. Diethylaluminiumchlorid, hergestellt.
EPDM-Kautschuk wird in analoger Weise durch Polymerisation eines Gemisches aus
mehr als 25 % Ethylen,
mehr als 25 % Propylen und
1 - 10 %, insbesondere 1 - 3 %, eines Diens hergestellt.
Dieses Dien sollte nicht konjugiert sein. Vorzugsweise handelt es sich um Hexadien-1,4, Dicyclopentadien und insbesondere 5-Ethylidennorbornen-2 (vgl. Kirk-Othmer "Encyclopedia of Chemical Technology" 3rd. ed. Vol. 8, p. 492 - 500 (1979).

III. Polyethylen und Polypropylen

IV. Polymere konjugierter Diene wie Polybutadien, Polyisopren und Poly(2,3-dimethylbutadien)

V. Butadien-Styrol-Copolymere
Der Styrolanteil ist nicht kritisch. Er kann zwischen 0 % (vgl. IV.) und 100 % (vgl. VI.) liegen. Sowohl Block-, Pfropf- als auch statistische Copolymere sind möglich.

VI. Polystyrol

Die Asparaginsäurekomponente ist entweder Asparaginsäure selbst oder ein Asparaginsäurederivat der allgemeinen Formel

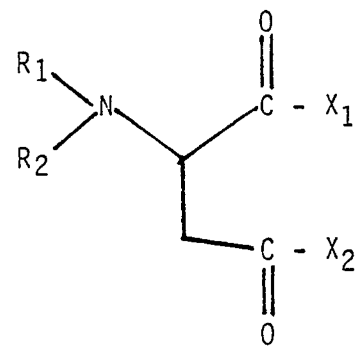

wobei $X_1$ und $X_2$ unabhängig voneinander für eine OH-Gruppe, einen Alkoxyrest mit 1 bis 10 C-Atomen oder die Gruppe $NR_1R_2$ stehen oder zusammen Sauerstoff oder die Gruppen $-NR_1-$ bedeuten und $R_1$ und $R_2$ jeweils unabhängig voneinander Wasserstoff, einen (Cyclo)Alkylrest mit 1 bis 10 C-Atomen, einen Hydroxyalkylrest mit 1 bis 10 C-Atomen, einen Arylrest mit bis zu 10 C-Atomen und einen Acylrest mit bis zu 10 C-Atomen bedeuten oder $R_1$ und $R_2$ zusammen für einen gegebenenfalls hydroxygruppenhaltigen Alkylenrest mit 2

bis 9 C-Atomen stehen.

Die Funktionalisierung wird in der Schmelze bei Temperaturen zwischen 180 und 320 °C, bevorzugt zwischen 220 und 300 °C, durchgeführt. Dabei wird das olefinische Polymere mit dem Asparaginsäurederivat zunächst trocken vorgemischt und dann in einem knetenden Agreggat, z. B. einem Extruder, aufgeschmolzen. Man kann aber das Asparaginsäurederivat auch als Feststoff oder als Flüssigkeit, z. B. über eine Weichmacherdosiereinrichtung direkt in die Schmelze des olefinischen Polymeren geben. Eine nachfolgende Entgasung, vorzugsweise unter Anlegen eines Vakuums, ist zur Entfernung flüchtiger Nebenprodukte wie Wasser oder n-Butanol empfehlenswert.

Beispiel 1

100 Teile EPDM (Buna® AP 437 der Bunawerke Hüls AG) wurden auf einem Leistritz Doppelschneckenextruder LSM 30.34 mit einem Temperaturprofil zwischen 200 und 280 °C extrudiert, während 2,0 Teile N-(2-Hydroxyethyl)-asparaginsäuredibutylester (HAB) (erhältlich durch Michael-Addition von Ethanolamin an Maleinsäuredibutylester) in die Schmelze flüssig eindosiert wurden. Zur Entfernung von entstandenem n-Butanol wurde ein Vakuum von 100 mbar angelegt. Der Strang wurde in Wasser gekühlt und granuliert. 5 g des erhaltenen, funktionalisierten EPDM-Kautschukes wurden zweimal aus Toluol/Aceton umgefällt; im IR ist bei 1 700 $cm^{-1}$ eine deutliche Absorption sichtbar. Elementaranalyse: 0,072 % N (Theorie: 0,097 %)

Beispiel 2

100 Teile Polyoctenylen (VESTENAMER® 8012 der Hüls AG) wurden mit 2 Teilen Asparaginsäure vorgemischt und auf der gleichen Maschine wie in Beispiel 1 bei 290 °C Schmelzetemperatur extrudiert, gekühlt und granuliert. 5 g des erhaltenen funktionalisierten Polyoctenamers wurden zweimal aus Toluol/Aceton umgefällt; im IR ist bei 1 700 $cm^{-1}$ eine starke Absorption sichtbar. Elementaranalyse: 0,19 % N (Theorie: 0,21 %).

Beispiel 3

100 Teile HDPE (VESTOLEN® A 5042 der Hüls AG) wurden analog zu Beispiel 2 mit 2 Teilen Asparaginsäure funktionalisiert.

Beispiel 4

100 Teile EPDM (BUNA® AP 537 der Bunawerke Hüls AG) wurden analog zu Beispiel 2 mit 2 Teilen Asparaginsäure funktionalisiert.

## Ansprüche

1. Verfahren zum Funktionalisieren eines thermoplastisch verarbeitbaren, olefinischen Polymeren durch Umsetzung einer organischen Säure oder deren Derivat in der Schmelze des zu funktionalisierenden Polymeren bei erhöhter Temperatur,
dadurch gekennzeichnet,
daß man
als Polymer das Polymerisat mindestens eines Monomeren aus der Gruppe der Olefine, Diene und vinylaromatischen Verbindungen
und
als Säurekomponente Asparaginsäure bzw. ein Asparaginsäurederivat der allgemeinen Formel

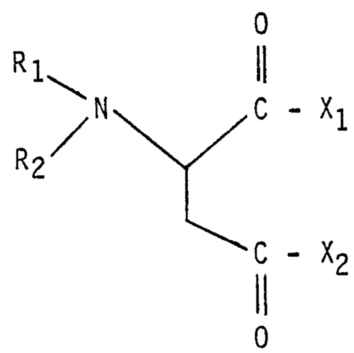

einsetzt, wobei $X_1$ und $X_2$ unabhängig voneinander für eine OH-Gruppe, einen Alkoxyrest mit 1 bis 10 C-Atomen oder die Gruppe $NR_1R_2$ stehen oder zusammen Sauerstoff oder die Gruppen $-NR_1-$ bedeuten und $R_1$ und $R_2$ jeweils unabhängig voneinander Wasserstoff, einen (Cyclo)Alkylrest mit 1 bis 10 C-Atomen, einen Hydroxyalkylrest mit 1 bis 10 C-Atomen, einen Arylrest mit bis zu 10 C-Atomen und einen Acylrest mit bis zu 10 C-Atomen bedeuten oder $R_1$ und $R_2$ zusammen für einen gegebenenfalls hydroxygruppenhaltigen Alkylenrest mit 2 bis 9 C-Atomen stehen.

2. Verfahren nach Anspruch 1,
dadurch gekennzeichnet,
daß man als Polymer ein Polyalkenylen, insbesondere Polyoctenylen, einsetzt.

3. Verfahren nach Anspruch 1,
dadurch gekennzeichnet,
daß man als Polymer einen EP(D)M-Kautschuk einsetzt.

4. Verfahren nach den Ansprüchen 1 bis 3, dadurch gekennzeichnet, daß die Reste $X_1$ und $X_2$ für die Hydroxylgruppe oder einen Alkoxyrest mit 1 bis 4 C-Atomen stehen.

5. Verfahren nach den Ansprüchen 1 bis 4, dadurch gekennzeichnet, daß der Rest $R_1$ Wasserstoff bedeutet und der Rest $R_2$ für eine Hydroxyalkylgruppe steht.

6. Verfahren nach den Ansprüchen 1 bis 5, dadurch gekennzeichnet, daß man ein Gemisch aus 96 bis 99,9 Gewichtsprozent eines thermoplastisch verarbeitbaren Polymers und 0,1 bis 4 Gewichtsprozent Asparaginsäure bzw. eines Asparaginsäurederivates umsetzt.

7. Verfahren nach den Ansprüchen 1 bis 6, dadurch gekennzeichnet, daß man die Reaktion in Gegenwart eines Katalysators und/oder Stabilisators durchführt.

8. Verfahren nach den Ansprüchen 1 bis 7, dadurch gekennzeichnet, daß man die Reaktion bei einer Temperatur von 180 bis 320 °C durchführt.

9. Funktionalisierte olfefinische Polymere, erhalten nach den Ansprüchen 1 bis 8.